# FASCICULE DE BREVET EUROPEEN

(11) **EP 2 374 774 B1**
(45) Date de publication et mention de la délivrance du brevet: **23.01.2013**
(21) Numéro de dépôt: 11172698.0
(22) Date de dépôt: 11.07.2003
(51) Int. Cl.: C04B 35/83, C04B 35/80

(54) **Installation pour le traitement thermique à haute température et la densification par infiltration chimique en phase vapeur de textures en carbone**
Vorrichtung zur Hochtemperaturwärmebehandlung und Verdichtung von Kohlenstofftexturen mittels chemischer Dampfinfiltration
Device for high-temperature heat treatment and densification by chemical infiltration of carbon texture in a steam phase

(30) Priorité: 12.07.2002 FR 0208822
(43) Date de publication de la demande: 12.10.2011
(62) Demande divisionnaire de: 03769523.6
(73) Titulaire: Messier-Bugatti-Dowty, 78140 Velizy Villacoublay (FR)
(72) Inventeur: Sion, Eric, 33127 Saint Jean d'Illac (FR)
(74) Mandataire: Joly, Jean-Jacques

(56) Documents cités:
- US-A- 5 154 776
- US-A- 5 348 774
- US-A- 5 773 122

## Description

### Arrière-plan de l'invention

L'invention concerne l'obtention de pièces en matériau composite comprenant une texture de renfort en carbone densifiée par une matrice formée par infiltration chimique en phase vapeur (ou CVI, pour "Chemical Vapour Infiltration").

Un domaine particulier d'application de l'invention est l'obtention de pièces en matériau composite thermostructural comprenant un renfort en fibres de carbone densifié par une matrice carbone ou céramique. De telles pièces sont utilisées dans le domaine aéronautique et spatial, ainsi que pour des éléments de friction, notamment des disques de frein.

La texture de renfort est typiquement obtenue à partir de fibres en précurseur de carbone telles que des fibres en polyacrylonitrile (PAN) préoxydé, des fibres de brai, des fibres phénoliques ou des fibres en rayonne, qui sont plus aptes que les fibres de carbone à subir les opérations textiles nécessaires pour la mise en forme de ces textures.

La transformation en carbone de la texture en fibres de précurseur de carbone, pour obtenir une texture ou préforme en fibres de carbone, est réalisée par traitement thermique. A l'échelle industrielle, le traitement thermique est réalisé dans un four, sensiblement sous pression atmosphérique, et sous balayage par gaz neutre, tel l'azote. La température est élevée progressivement jusqu'à environ 900°C. La transformation du précurseur en carbone est quasi-complète, le taux de carbone obtenu étant généralement supérieur à 95 % et pouvant atteindre 99 % ou plus. La perte de masse est importante, de l'ordre de 50 %, et s'accompagne de la production d'un volume important d'effluent gazeux.

Au moins pour certaines utilisations, il est nécessaire non seulement de transformer le précurseur en carbone, mais aussi de réaliser un traitement thermique subséquent à température élevée, notamment afin d'éliminer des métaux ou impuretés métalliques provenant du précurseur et/ou de conférer des propriétés particulières aux fibres de carbone. C'est le cas en particulier pour l'élimination du sodium contenu dans le PAN préoxydé, lequel sodium peut avoir un effet néfaste sur la tenue à l'oxydation de pièces en matériau composite obtenues.

C'est pourquoi, après une première étape de carbonisation, les textures en fibres de carbone à précurseur PAN préoxydé peuvent être soumises à un traitement thermique à température élevée et sous pression réduite pour éliminer le sodium par sublimation avant densification des textures. Cette deuxième étape est réalisée sous pression réduite, avec balayage par gaz neutre tel l'azote, et à une température généralement supérieure à 1000°C, typiquement comprise environ entre 1400°C et 1650°C, pour l'élimination du sodium et pouvant atteindre 2000°C ou 2200°C, voire 2500°C pour l'élimination d'autres impuretés métalliques et/ou une transformation des propriétés des fibres.

Les étapes de carbonisation, de traitement thermique à température élevée et ensuite de densification par infiltration chimique en phase vapeur sont habituellement réalisées dans des installations différentes adaptées. Au stade industriel, elles durent chacune plusieurs jours. C'est pourquoi notamment le processus d'obtention de pièces en matériau composite sans sodium contenant un renfort fibreux réalisé à partir de précurseur PAN préoxydé est donc long et coûteux.

Les mêmes problèmes sont rencontrés avec des fibres en carbone provenant de précurseur autre que le PAN préoxydé contenant également du sodium ou d'autres métaux, tels que magnésium ou calcium, à éliminer, et lorsque doivent être éliminés des métaux ou impuretés métalliques tels que fer, nickel ou chrome, par exemple, qui requièrent un traitement thermique à température élevée, typiquement jusqu'à au moins 2000°C ou 2200°C, voire 2500°C pour être éliminés par sublimation.

US5348774 décrit une installation pour le traitement thermique à haute température et la densification par infiltration chimique en phase vapeur de préformes en fibres de carbone, comportant une enceinte, des moyens de chauffage de l'enceinte, une entrée d'admission de gaz inerte tel que l'argon pour le balayage de l'enceinte, une sortie d'effluent gazeux hors de l'enceinte, et un premier circuit d'évacuation d'effluent comprenant une canalisation d'évacuation d'effluent raccordée à la première sortie d'effluent gazeux comportant une conduite d'admission de phase gazeuse réactionnelle débouchant dans l'enceinte et une vanne d'isolement du premier circuit d'évacuation d'effluent par rapport à l'enceinte.

### Objet et résumé de l'invention

L'invention a pour but de fournir une installation permettant d'obtenir des pièces en matériau composite par densification, par infiltration chimique en phase vapeur de préformes en fibres de carbone, notamment des préformes contenant un ou plusieurs métaux à éliminer, avec des économies de coût et de durée de traitement très importantes.

Ce but est atteint grâce à une installation telle que définie par la revendication 1.

Des particularités de l'installation font l'objet des revendications dépendantes.

Une telle installation permet de mettre en oeuvre un procédé comportant les étapes qui consistent à :
- placer les préformes en fibres de carbone dans une enceinte,
- effectuer un traitement thermique des préformes dans l'enceinte avec balayage par un gaz neutre et sous pression réduite,
- pendant le traitement thermique, extraire en continu un effluent gazeux à travers une première sortie d'effluent gazeux hors de l'enceinte, laquelle sortie est reliée à un premier circuit d'évacuation d'effluent,
- à la fin du traitement thermique, fermer la première sortie d'effluent afin d'isoler le circuit d'évacuation d'effluent par rapport à l'enceinte,
- interrompre le balayage de l'enceinte par gaz neutre,
- effectuer en enchaînant une densification par infiltration chimique en phase vapeur des textures traitées thermiquement et laissées dans l'enceinte en admettant dans l'enceinte une phase gazeuse réactionnelle à travers au moins une conduite d'admission de phase gazeuse réactionnelle débouchant dans l'enceinte, avec extraction d'effluent gazeux à travers une deuxième sortie d'effluent gazeux hors de l'enceinte, ladite deuxième sortie étant fermée pendant l'étape de traitement thermique.

Le procédé comprend la neutralisation de métal contenu dans l'effluent gazeux extrait de l'enceinte lors de l'étape de traitement thermique.

La neutralisation du métal, typiquement du sodium, peut être effectuée après la fin du traitement thermique par exemple par hydratation de sodium condensé sur la paroi d'une canalisation reliée à la première sortie d'effluent. L'hydratation peut être réalisée par injection d'eau dans ladite canalisation, notamment par injection de vapeur d'eau éventuellement diluée dans un gaz neutre tel l'azote ou l'argon.

En variante, la neutralisation du métal, typiquement du sodium, peut être effectuée en continu par injection d'un agent de neutralisation dans l'effluent gazeux extrait pendant le traitement thermique. L'agent de neutralisation du sodium peut être de l'eau sous forme vapeur ou du dioxyde de carbone, éventuellement dilué dans un gaz neutre tel l'azote ou l'argon.

Selon une autre particularité du procédé, le premier circuit d'évacuation d'effluent est purgé après la fin du traitement thermique. Cette purge peut être réalisée pendant l'étape de densification des textures en carbone, alors que le premier circuit d'évacuation d'effluent est isolé de l'enceinte. La purge peut être réalisée par injection d'eau de nettoyage dans le premier circuit d'évacuation, ou par démontage au moins partiel et lavage de ce circuit.

Avantageusement, la ou chaque conduite d'admission de phase gazeuse réactionnelle dans l'enceinte est balayée par un gaz neutre pendant l'étape de traitement thermique afin d'éviter qu'une partie de l'effluent gazeux produit lors du traitement thermique accède à cette conduite.

Selon encore une autre particularité du procédé, le premier circuit d'évacuation d'effluent peut être utilisé, au moins en partie, pour injecter dans l'enceinte un gaz de refroidissement des pièces en matériau composite obtenues après la fin de l'étape de densification.

### Brève description des dessins

L'invention sera mieux comprise à la lecture de la description faite ci-après, à titre indicatif mais non limitatif, en référence aux dessins annexés sur lesquels :
- la figure 1 est une vue très schématique en partie en coupe montrant un mode de réalisation d'une installation selon l'invention;
- la figure 2 est une vue plus détaillée du dispositif d'injection d'agent de neutralisation dans l'installation de la figure 1 ; et
- la figure 3 est un ordinogramme illustrant le déroulement d'un mode de mise en oeuvre d'un procédé mis en oeuvre dans une installation selon l'invention.

### Description détaillée de modes de réalisation

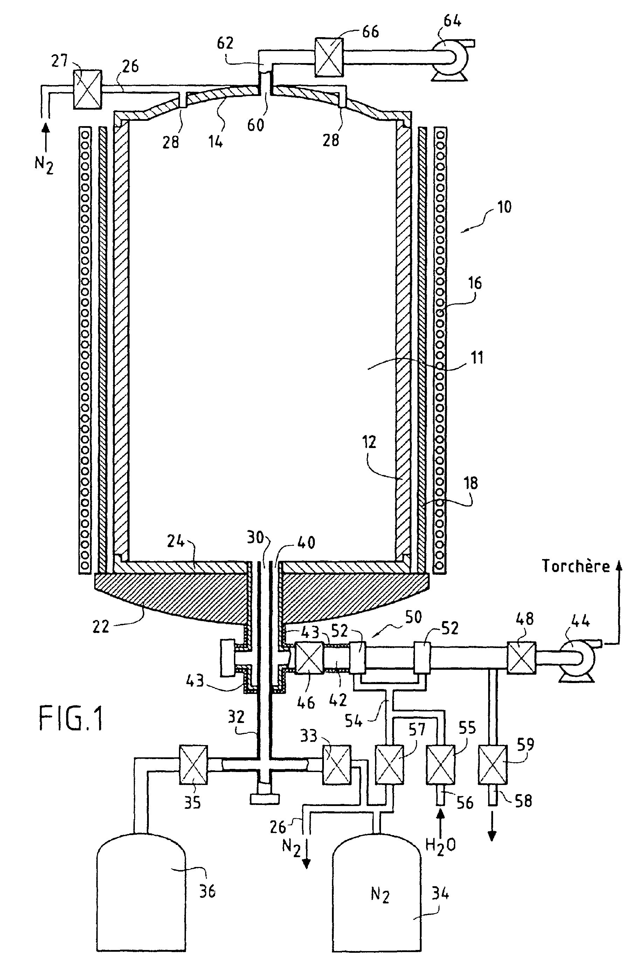

La figure 1 montre une installation comportant un four 10 avec un suscepteur 12 de forme cylindrique et d'axe vertical qui délimite latéralement un volume 11 pour le chargement de textures fibreuses en carbone (non représentées), par exemple des textures ou préformes fibreuses obtenues par carbonisation de textures en fibres PAN préoxydé. Le suscepteur 12 est surmonté d'un couvercle 14.

Le suscepteur 12, par exemple en graphite, est chauffé par couplage inductif avec un inducteur 16 qui entoure le suscepteur avec interposition d'un isolant thermique 18. L'inducteur est alimenté par un circuit (non représenté) qui délivre un courant en fonction du besoin en chauffage du four.

Le fond du four est formé d'un isolant thermique 22 recouvert d'une sole de four 24, par exemple en graphite, sur laquelle repose le suscepteur.

L'ensemble est logé dans une enveloppe, par exemple métallique (non représentée).

Une conduite 26 d'alimentation en gaz inerte de balayage, par exemple de l'azote, est reliée à une source d'azote par l'intermédiaire d'une vanne 27 et à un ou plusieurs orifices 28 d'injection de gaz neutre de balayage dans le four 10 à travers le couvercle 14.

Une entrée 30 de phase gazeuse réactionnelle dans le four est formée au fond de celui-ci. L'entrée 30 est raccordée à une conduite d'alimentation 32. Celle-ci est reliée, d'une part, à une source 34 de gaz neutre tel que de l'azote (N₂) et, d'autre part, à une source 36 de phase gazeuse réactionnelle. Des vannes 33, 35 permettent de relier sélectivement la source 34 ou la source 36 à la conduite 32. La source 34 est reliée à la vanne 27 montée sur la conduite 26. La source de phase gazeuse réactionnelle peut être formée de plusieurs réservoirs contenant des gaz différents.

Une première sortie 40 de gaz effluent hors du four est formée également dans le fond de celui-ci. Dans l'exemple illustré, la sortie 40 est une sortie de forme annulaire entourant l'extrémité de la conduite 32 raccordée à l'entrée 30. Bien entendu, la sortie 40 peut être formée séparément de l'entrée 30 dans une autre zone du fond du four. On notera aussi que plusieurs entrées distinctes de phase réactionnelle pourront être prévues dans le fond du four.

Une canalisation 42 d'évacuation de gaz effluent est raccordée à la sortie 40 et relie celle-ci à un circuit d'évacuation d'effluent gazeux hors du four, lequel circuit comporte au moins une pompe à vide 44. Une vanne 46 est montée sur la canalisation 42 à proximité de la sortie 40 afin de pouvoir isoler le circuit d'évacuation par rapport à l'intérieur du four.

Un dispositif 50 d'injection d'un agent de neutralisation de produit(s), en particulier de sodium seul ou combiné, contenu(s) dans l'effluent gazeux extrait par la sortie 40 est monté sur la canalisation 42 entre la vanne 46 et une vanne 48 située à l'entrée de la pompe 44. Le dispositif d'injection 50 comporte un ou plusieurs anneaux creux d'injection 52 entourant la canalisation 42. Dans l'exemple illustré, deux anneaux sont prévus espacés l'un de l'autre le long de la canalisation 42. Les anneaux d'injection 52 sont alimentés en parallèle par une conduite 54 reliée d'une part à une source d'agent de neutralisation, par exemple une source de vapeur d'eau par l'intermédiaire d'une conduite 56 munie d'une vanne 55 et, d'autre part, à la source d'azote 34 avec interposition d'une vanne 57. En amont de la vanne 48, dans le sens d'écoulement d'effluent gazeux, la canalisation 42 présente un orifice de purge raccordé à une conduite de purge 58 munie d'une vanne 59.

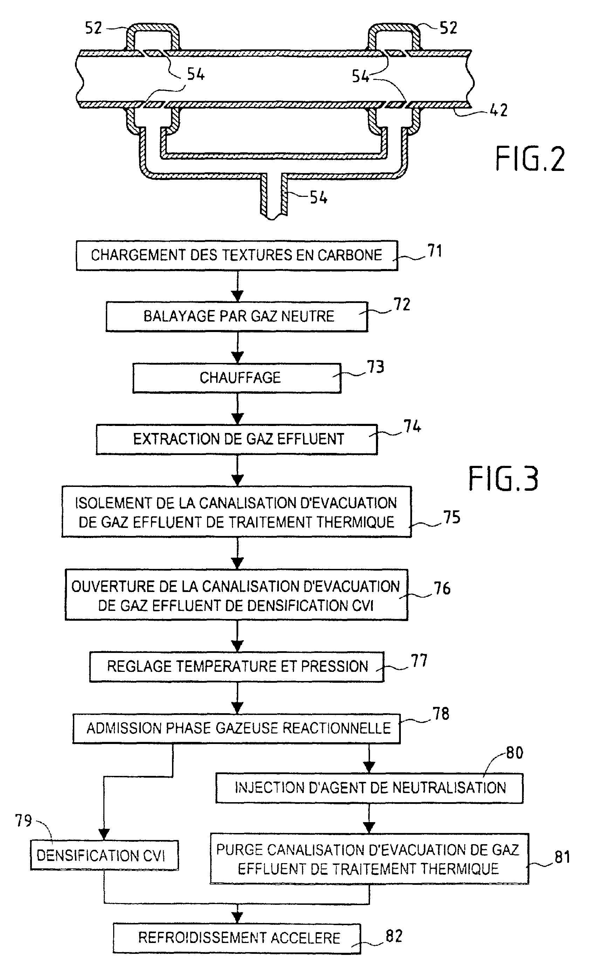

Comme le montre plus en détail la figure 2, chaque anneau d'injection 52 forme un conduit torique entourant la canalisation 42 et communiquant avec celle-ci à travers des perçages 54 formés dans la paroi de la conduite. Les perçages 54 peuvent être inclinés par rapport à la normale à la paroi de la canalisation 42 pour diriger le flux d'agent de neutralisation vers l'aval.

Entre le fond 22 du four et l'anneau d'injection 52 situé le plus en amont sur la canalisation 42, celle-ci est isolée thermiquement par calorifugeage 43 afin d'éviter un refroidissement trop rapide de l'effluent gazeux extrait par la sortie 40. Le calorifugeage 43 peut être complété et/ou remplacé au moins en partie par un moyen de chauffage de la canalisation 42, par exemple par résistances électriques.

Une deuxième sortie 60 de gaz effluent hors du four est formée dans le couvercle 14. La sortie 60 est reliée, par l'intermédiaire d'une canalisation 62, à un système de pompage tel qu'une pompe à vide 64 ou un dispositif éjecto-condenseur. Une vanne 66 est montée sur la canalisation 62 à proximité de la sortie 60.

Le fonctionnement de l'installation décrite ci-avant est le suivant. On se référera aussi à la figure 3.

Des textures en carbone, par exemple des textures en fibres de carbone à précurseur PAN préoxydé sont chargées dans le four 10 (étape 71), l'enceinte 11 étant munie, de façon classique, d'un outillage de chargement des textures. Ces textures peuvent être sous forme de préformes de pièces à réaliser en matériau composite.

Les vannes 35, 55, 57, 59, 66 étant fermées et les vannes 27, 33, 46, 48 étant ouvertes, on réalise un balayage de l'enceinte du gaz neutre, en l'espèce de l'azote, admis à travers la conduite 26 et les ouvertures 28 en provenance de la source 34 (étape 72), ainsi qu'un balayage de la conduite 32 d'alimentation de l'entrée 30 en phase gazeuse réactionnelle par de l'azote admis à travers la vanne 33, la pompe 44 étant mise en marche.

La température dans le four est augmentée progressivement par alimentation de l'inducteur 16 (étape 73), pour être élevée jusqu'à une valeur supérieure à 1000°C de préférence au moins égale à 1400°C, par exemple comprise entre 1400°C et 1650°C, lorsque l'on souhaite éliminer le sodium contenu dans les textures en carbone, et pouvant atteindre 2000°C ou 2200°C, voire 2500°C, lorsque l'on souhaite éliminer d'autres impuretés métalliques ou conférer des propriétés particulières aux fibres de carbone par traitement thermique à très haute température. La pression dans l'enceinte 11 est réglée à une valeur comprise par exemple entre 0,1 kPa et 50 kPa, de préférence inférieure à 5 kPa.

Le gaz effluent contenant l'azote de balayage et des produits gazeux, notamment du sodium seul ou combiné à l'état sublimé, provenant du traitement thermique des textures en carbone est extrait de l'enceinte par la sortie 40 et évacué par la canalisation 42 (étape 74).

Du sodium seul ou combiné extrait à l'état sublimé à travers la sortie 40 se condense sur des parties de paroi de la canalisation. Le dispositif d'injection 50 est disposé de manière que l'anneau d'injection 52 situé le plus en amont se trouve relativement proche de la sortie 40, en amont de la zone où se produit cette condensation. Le calorifugeage et/ou le réchauffage de la portion de canalisation 42 située entre la sortie du fond du four et cet anneau d'injection amont contribuent à éviter une condensation prématurée du sodium de sorte que celui-ci se dépose entre les deux anneaux d'injection.

La sortie de la pompe 44 peut être reliée à l'air libre ou à une torchère.

Le traitement thermique est poursuivi pendant une durée suffisante pour éliminer l'intégralité ou la quasi-intégralité du sodium, par exemple une durée comprise environ entre 0 h et 5 h, à l'échelle industrielle.

Le balayage par gaz neutre de la conduite 32 et de l'entrée 40 d'amenée de phase gazeuse réactionnelle dans l'enceinte a pour but d'éviter qu'une partie de l'effluent gazeux produit pendant le traitement thermique accède à la conduite 32 et puisse entraîner la condensation de sodium sur les parois de cette conduite 52.

A la fin du traitement thermique, les vannes 27, 46, 55, 57 sont fermées, de manière à isoler la canalisation d'évacuation 42 par rapport à l'enceinte (étape 75), la pompe 44 étant arrêtée. Les vannes 33 et 66 sont ouvertes afin de maintenir un balayage de l'enceinte sous gaz neutre, canalisation d'évacuation 62 étant ouverte et la pompe 64 étant mise en marche (étape 76). La température et la pression dans l'enceinte 11 sont réglées aux valeurs souhaitées pour la phase de densification par infiltration chimique en phase vapeur (étape 77).

La vanne 35 est alors ouverte et la vanne 33 fermée pour admettre la phase gazeuse réactionnelle à l'intérieur de l'enceinte (étape 78) et réaliser la densification des textures en fibres de carbone purifiées par le traitement thermique (étape 79). Les processus d'infiltration chimique en phase vapeur sont bien connus. A titre d'exemple, pour la densification de textures en fibres de carbone par une matrice de carbone pyrolytique, on peut utiliser une phase gazeuse réactionnelle composée notamment de méthane et/ou propane, la température dans l'enceinte étant d'environ 900°C à 1100°C et la pression d'environ 1 kPa à 100 kPa. Pour d'autres matériaux à déposer au sein de la porosité des textures à densifier, par exemple des matériaux céramiques, on choisit une phase gazeuse réactionnelle comprenant des précurseurs gazeux adaptés, comme cela est bien connu.

Pendant l'étape de densification par infiltration chimique en phase vapeur, on réalise une neutralisation par hydratation du sodium condensé sur les parois de la canalisation d'évacuation 42 (étape 80).

A cet effet, les vannes 55, 57 et 59 étant ouvertes et la vanne 48 étant fermée, de la vapeur d'eau est introduite dans la conduite 56. Un mélange de vapeur d'eau et d'azote (azote humide) est amené aux anneaux d'injection 52 pour venir au contact des dépôts de sodium solide formés sur la paroi de la canalisation 42 et neutraliser le sodium par hydratation. Le mélange de la vapeur d'eau avec de l'azote n'est pas indispensable, mais permet de réaliser une dilution de la vapeur d'eau et d'éviter une réaction trop violente avec le sodium, la quantité de sodium à neutraliser étant faible.

Une purge de la canalisation 42 peut ensuite être réalisée (étape 81). Les vannes 55 et 59 étant ouvertes, et les vannes 57 et 48 étant fermées, de l'eau sous forme liquide est admise dans la conduite 56 et, de là, dans le dispositif d'injection 50. Plusieurs rinçages consécutifs de la canalisation 42 peuvent être effectués pour éliminer la soude produite préalablement par neutralisation du sodium.

Après rinçage, un séchage de la canalisation 42 peut être réalisé par simple ouverture de la vanne 48 et mise en marche de la pompe 44, les vannes 55, 57 et 59 étant fermées.

A la fin du processus d'infiltration chimique en phase vapeur, un refroidissement accéléré des pièces en matériau composite obtenues par densification des textures en carbone peut être réalisé (étape 82).

A cet effet, après fermeture de la vanne 35, de l'azote à température ambiante peut être admis dans l'enceinte par ouverture de la vanne 33 ou par ouverture des vannes 57 et 46, le refroidissement accéléré étant réalisé dans ce dernier cas en utilisant la canalisation d'évacuation 42 pour envoyer l'azote dans l'enceinte 11, la canalisation 42 ayant été purgée et séchée.

Dans ce qui précède, on a envisagé l'utilisation de vapeur d'eau comme agent de neutralisation du sodium.

D'autres agents de neutralisation du sodium peuvent être utilisés par exemple du dioxyde de carbone (CO₂) injecté dans la conduite 42. L'injection de CO₂ peut être réalisée en continu pendant l'étape de traitement thermique, donnant naissance à un dépôt de carbonate de sodium. Le CO₂ injecté peut être dilué par gaz neutre tel que l'azote. La canalisation 42, ainsi qu'éventuellement d'autres parties du circuit d'évacuation d'effluent dans lesquelles du carbonate de sodium peut être déposé, sont purgées après la fin du traitement thermique. La purge est réalisée par exemple par rinçage à l'eau, éventuellement après démontage des parties de circuit d'évacuation à purger.

On notera que dans l'installation de la figure 1, l'hydratation du sodium extrait des textures en fibres de carbone lors du traitement thermique peut être aussi réalisée en continu, pendant ce traitement, et non après la fin de celui-ci. L'injection du mélange de vapeur d'eau et d'azote est alors réalisée de façon continue dans l'effluent gazeux extrait à travers la canalisation d'évacuation 42.

Le procédé décrit ci-avant dans le cadre de l'application à des textures en fibres de carbone à précurseur PAN préoxydé contenant du sodium peut être utilisé avec des textures en carbone provenant d'autres précurseurs, mais contenant également du sodium ou d'autres métaux à éliminer tels que magnésium ou calcium.

Le procédé peut être également utilisé pour conférer des propriétés particulières aux fibres de carbone par traitement à très haute température et/ou pour éliminer des impuretés métalliques, notamment du fer, du nickel ou du chrome en adoptant pour le traitement thermique une température de 2000°C, ou plus, par exemple 2200°C, voire 2500°C. Une neutralisation de telles impuretés métalliques évacuées avec le gaz effluent n'est pas nécessaire.

## Revendications

1. Installation pour le traitement thermique à haute température et la densification par infiltration chimique en phase vapeur de préformes en fibres de carbone, comportant une enceinte (11), des moyens (16, 12) de chauffage de l'enceinte, au moins une entrée (28) d'admission de gaz neutre de balayage dans l'enceinte, une première sortie (40) d'effluent gazeux hors de l'enceinte, et au moins une conduite (32) d'admission de phase gazeuse réactionnelle débouchant dans l'enceinte (11),
**caractérisée en ce qu'**elle comporte en outre: un premier circuit d'évacuation d'effluent comprenant une canalisation d'évacuation d'effluent (42) raccordée à la première sortie (40) d'effluent gazeux, une deuxième sortie (60) d'effluent gazeux hors de l'enceinte distincte de la première sortie (40) d'effluent gazeux, une deuxième canalisation d'évacuation (62) raccordée à la deuxième sortie d'effluent gazeux et distincte de la première canalisation d'évacuation (42), une première vanne (46) d'isolement montée sur la première canalisation d'évacuation pour isoler le premier circuit d'évacuation d'effluent par rapport à l'enceinte, une deuxième vanne (66) d'isolement montée sur la deuxième canalisation d'évacuation d'effluent par rapport à l'enceinte, et un dispositif (50) d'injection dans la première canalisation d'évacuation d'effluent (42), d'un agent de neutralisation de métal contenu dans un effluent extrait par le premier circuit d'évacuation d'effluent.

2. Installation selon la revendication 1, **caractérisée en ce que** le dispositif d'injection (50) est disposé en aval de la vanne (46) d'isolement du premier circuit d'évacuation d'effluent.

3. Installation selon l'une quelconque des revendications 1 et 2, **caractérisée en ce qu'**elle comprend plusieurs points (52) d'injection d'agent de neutralisation espacés l'un de l'autre le long de la canalisation d'évacuation d'effluent (42).

4. Installation selon l'une quelconque des revendications 1 à 3, **caractérisée en ce que** des moyens sont prévus pour réaliser un balayage de ladite canalisation (32) d'admission de phase gazeuse réactionnelle par un gaz neutre.

5. Installation selon l'une quelconque des revendications 1 à 4, **caractérisée en ce qu'**elle comporte une entrée d'admission de gaz de refroidissement dans l'enceinte.

6. Installation selon la revendication 5, **caractérisée en ce que** l'entrée d'admission de gaz de refroidissement dans l'enceinte et la première sortie d'effluent (40) sont confondues.

## Claims

1. An installation for subjecting carbon fiber preforms to high temperature heat treatment and to densification by chemical vapor infiltration, the installation comprising an enclosure (11), means (16, 12) for heating the enclosure, at least one inlet (28) for admitting an inert sweeping gas into the enclosure, a first outlet (40) for exhausting gaseous effluent from the enclosure, and at least one reagent gas admission duct (32) opening out into the enclosure (11),
the installation being **characterized in that** it further comprises a first effluent exhaust circuit comprising an effluent exhaust pipe (42) connected to the first gaseous effluent outlet (40), a second outlet (60) for exhausting gaseous effluent from the enclosure and distinct from the first gaseous effluent outlet (40), a second effluent exhaust pipe (62) connected to the second gaseous effluent outlet and distinct from the first effluent exhaust pipe (42), a first valve (46) mounted on the first effluent exhaust pipe (42) for isolating the first effluent exhaust circuit from the enclosure, a second valve (66) for isolating the second effluent exhaust pipe from the enclosure, and an injector device (50) for injecting an agent into the first effluent exhaust pipe (42) connected to the first gaseous effluent outlet, said agent serving to neutralize metal contained in effluent extracted by the first effluent exhaust circuit.

2. An installation according to claim 1, **characterized in that** the injector device (50) is disposed downstream from the valve (46) for isolating the first effluent exhaust circuit.

3. An installation according to claim 1 or claim 2, **characterized in that** it has a plurality of points (52) for injection of the neutralizing agent, said points being spaced apart from one another along the effluent exhaust pipe (42).

4. An installation according to any one of claims 1 to 3, **characterized in that** means are provided for sweeping said reagent gas admission duct (32) with an inert gas.

5. An installation according to any one of claims 1 to 4, **characterized in that** it includes an inlet for admitting cooling gas into the enclosure.

6. An installation according to claim 5, **characterized in that** the inlet for admitting cooling gas into the enclosure and the first effluent outlet (40) are constituted by a common port.

## Patentansprüche

1. Anlage zur Hochtemperaturwärmebehandlung und zur Verdichtung von Kohlenstoffaservorformlingen mittels chemischer Gasphaseninfiltration, umfassend einen Raum (11), Mittel (16, 12) zum Erhitzen des Raums, wenigstens einen Einlaß (28) zum Zuführen von neutralem Spülgas in den Raum, einen ersten Abgasauslaß (40) aus dem Raum sowie wenigstens eine in den Raum (11) mündende Leitung (32) zum Zuführen von reaktiver Gasphase,
**dadurch gekennzeichnet, daß** sie ferner umfaßt: einen ersten Kreis zum Abführen von Abgas, umfassend eine Abgasabführrohrleitung (42), die an den ersten Abgasauslaß (40) angeschlossen ist, einen zweiten Abgasauslaß (60) aus dem Raum, der von dem ersten Abgasauslaß (40) getrennt ist, eine zweite Abführrohrleitung (62), die an den zweiten Abgasauslaß angeschlossen und von der ersten Abführrohrleitung (42) getrennt ist, ein erstes Absperrventil (46), das an der ersten Abführrohrleitung angebracht ist, um den ersten Abgasabführkreis gegenüber dem Raum zu isolieren, ein an der zweiten Abgasabführrohrleitung angebrachtes zweites Absperrventil (66) gegenüber dem Raum sowie eine Vorrichtung (50) zum Einspritzen eines Metallneutralisierungsmittels, das in einem über den ersten Abgasabführkreis abgeführten Abgas enthalten ist, in die erste Abgasabführrohrleitung (42).

2. Anlage nach Anspruch 1, **dadurch gekennzeichnet, daß** die Einspritzvorrichtung (50) dem Ventil (46) zum Absperren des ersten Abgasabführkreises nachgeordnet ist.

3. Anlage nach einem der Ansprüche 1 und 2, **dadurch gekennzeichnet, daß** sie mehrere Stellen (52) zum Einspritzen von Neutralisierungsmittel, die entlang der Abgasabführrohrleitung (42) voneinander beabstandet sind, umfaßt.

4. Anlage nach einem der Ansprüche 1 bis 3, **dadurch gekennzeichnet, daß** Mittel vorgesehen sind, um ein Spülen der Rohrleitung (32) zum Zuführen von reaktiver Gasphase mit einem Neutralgas durchzuführen.

5. Anlage nach einem der Ansprüche 1 bis 4, **dadurch gekennzeichnet, daß** sie einen Einlaß zum Zuführen von Kühlgas in den Raum umfaßt.

6. Anlage nach Anspruch 5, **dadurch gekennzeichnet, daß** der Einlaß zum Zuführen von Kühlgas in den Raum und der erste Abgasauslaß (40) vereint sind.
